# EUROPÄISCHE PATENTSCHRIFT

(11) **EP 0 509 218 B1**
(45) Veröffentlichungstag und Bekanntmachung des Hinweises auf die Patenterteilung: **26.07.1995**
(21) Anmeldenummer: 92103274.4
(22) Anmeldetag: 26.02.1992
(51) Int. Cl.: F04C 2/18, F04C 13/00

(54) **Zahnradpumpe**
Gear pump
Pompe à engrenages

(30) Priorität: 07.04.1991 DE 4111218
(43) Veröffentlichungstag der Anmeldung: 21.10.1992
(73) Patentinhaber: PAUL TROESTER MASCHINENFABRIK, D-30519 Hannover (DE)
(72) Erfinder: Baumgarten, Wilfried, Dipl.-Ing., W-3017 Pattensen (DE)
(74) Vertreter: Junius, Walther, Dr.

(56) Entgegenhaltungen:
- DE-A- 2 238 334
- DE-A- 2 938 276
- DE-A- 3 609 996
- US-A- 3 133 506
- US-A- 4 402 653

## Beschreibung

Die Erfindung betrifft eine Zahnradpumpe, bestehend aus einem mit einem Einlaß- und einem Auslaßkanal versehenen Gehäuse und zwei außenverzahnten Zahnrädern, deren Lager abgedichtet gegen das Fördergut im Gehäuse gelagert sind.

Eine derartige Zahnradpumpe ist aus der DE 90 11 156.7 U1 bekannt geworden. Diese bekannte Zahnradpumpe dient zur Förderung von hochviskosen, verharzenden Flüssigkeiten. Bei diesen ist es notwendig, daß Fördergut nicht in die Lager der Zahnräder eindringt. Denn das würde zu Störungen des Betriebes der Zahnradpumpe führen, das verharzende Fördergut würde in den Lagern sich verfestigen, dabei einen erhöhten Lagerwiderstand bilden, dabei starke Reibungswärme erzeugen, die zu einer Verkohlung des in die Lager eingedrungenen Fördergutes führen würde, wodurch die Lager verschleißen und sich festsetzen. Daher sind bei der Zahnradpumpe des DE 90 11 156 U1 Achsdichtungen und ein axial wirkendes Rückfördergewinde vorgesehen, wozu das Zahnrad eine zentrale Ausnehmung erhalten hat, in welche das Lagergehäuse hineinragt, welches auf seiner Außenseite das Rückfördergewinde und auf seiner Innenseite Dichtungen trägt. Die Zahnräder sind hier einseitig gelagert, weil bei dieser Lagerungsart die Anzahl der Dichtungs- und Rückfördermaßnahmen nur die Hälfte der bei doppelseitiger Lagerung notwendigen Maßnahmen beträgt. Diese einseitige Lagerung hat jedoch den Nachteil, daß unter den hohen, im Verzahnungsbereich auftretenden Drucken sich die das Zahnrad an ihrem Ende tragende, in den Lagern ruhende Welle elastisch durchbiegt und daher sich das Zahnrad im Gehäuse verkantet, was es wiederum notwendig macht, daß der Spalt zwischen Stirnseite des Zahnrades und Gehäusewandung ausreichend groß dimensioniert werden muß, um ein derartig verkantetes Zahnrad aufzunehmen. Das wiederum führt zu größerer Leckströmung und damit zu mehr Mischungsresten im Gehäuse.

Eine Zahnradpumpe, bei der das Problem der Verkantung nicht auftritt, ist aus der US-A-31 33 506 bekannt geworden, bei der die Zahnräder einen zentralen Hohlraum aufweisen, in welchen ein Wälzlager tragender Zapfen eingreift.

Damit ist das Abdichtungsproblem jedoch noch nicht gelöst. Ebenso wie bei Zahnradpumpen treten bei Schraubenverdichtern und Flügelzellenverdichtern, die ebenfalls mit rotierenden Verdichtungselementen arbeiten, Abdichtungsprobleme an den rotierenden Elementen auf. Bei der DE 36 09 996 A1 versucht man diese durch stirnseitig an den rotierenden Elementen anliegende Scheiben aus elastischem Material mit eingeformten radialen und Umfangsnuten zu lösen, Mittel die bei den hohen in Zahnradpumpen auftretenden Drucken kaum einsetzbar sind. Bei der DE 29 38 276 A1 sind in die Stirnseiten der Rotoren eine Vielzahl von schaufelförmigen Nuten eingearbeitet, die jede für sich nach ihrer Kurvenform einen Teil einer Spirale bilden und die eine Leckströmung des in dieser Maschine verdichteten Frigen-Gases vermindern, weil sie nach Art von gegensinnig arbeitenden Schaufeln den Eintritt in den Spalt zwischen Stirnseite und Gehäuse hindern, jedoch nicht unterbinden. In die Wellenzapfen der Rotoren sind anstelle von mechanischen Lagern Gewinde eines Gaslagers eingearbeitet, welche das verdichtete Gas über die Länge der Wellenzapfen verteilen.

Bei Zahnradpumpen treten insbesondere im Bereich der ineinandergreifenden Zähne extrem hohe Drucke auf, bei denen auch an den Stirnseiten der Zahnräder angebrachte schaufelartige Nuten kaum wirksam sind.

Die vorliegende Anmeldung vermeidet die Nachteile des Standes der Technik. Es ist die Aufgabe der vorliegenden Anmeldung, mit einfachen Mitteln den Verschleiß herabzusetzen und die Zahnradpumpe so zu gestalten, daß sie ohne Verlust an Lebensdauer auch schwierig zu fördernde Kautschukmischungsarten einwandfrei fördert.

Die Erfindung besteht darin, daß die Abdichtungen in Form einer Förderspirale zur Rückförderung von Fördergut an den Stirnseiten der Zahnräder zur Trennung von Förderraum und Lagerung der Zahnräder angeordnet sind, daß an den wellenförmigen bzw. hohlzapfenförmigen Teilen der Zahnräder Fördergewinde für die Rückführung von Schmiermittel angeordnet sind, daß hohe Drucke das Schmiermittel beaufschlagen, und daß Kanäle am Ort des Zusammentreffens von Fördergewinde und Förderspirale vorgesehen sind, durch die die Leckströmung des Fördergutes und des Schmiermittels nach außen abgeführt wird.

Bei dieser Zahnradpumpe wird die Leckströmung sowohl des Fördergutes als auch des Schmiermittels niedrig gehalten. Unter den hohen Drucken, die sowohl im Förderraum auftreten, als auch die das Schmiermittel beaufschlagen, können die Förderspirale und das Fördergewinde weder das Fördergut noch das Schmiermittel vollständig zurückführen, sie brauchen es auch nicht. Sowohl für die Reinhaltung des Schniermittels als auch für die Reinhaltung des Fördergutes ist es nämlich vorteilhaft, wenn der durch die Rückführungsmittel Förderspirale und Fördergewinde durchdringende Teil der Leckströmung nach außen abgeführt wird. Zur Abführung dienen die Kanäle am Ort des Zusammentreffens von Fördergewinde und Förderspirale.

Für eine Verhinderung des Eindringens von Fördergut in die Spalte zwischen den Stirnseiten der Zahnräder und den Gehäusewandungen kann es von Vorteil sein, eine Vorrichtung zum Einpressen eines mischungsverträglichen Schmiermittels in den Bereich der Dichtspiralen vorzusehen.

Das Wesen der Erfindung ist nachstehend anhand eines in der Zeichnung schematisch dargestellten Ausführungsbeispiel es näher erläutert. Es zeigen:
- Fig. 1: einen Längsschnitt durch die Zahnradpumpe,
- Fig. 2: einen Querschnitt durch die Zahnradpumpe,
- Fig. 3: einen Querschnitt durch eine Zahnradpumpe mit Strainer,
- Fig. 4: einen Längsschntt durch den Strainer.

Die Zahnradpumpe ist mit ihrem Gehäuse 1 an den Zylinder 2 des Extruders angeflanscht, welcher eine Büchse 3 aufnimmt, in welcher die Extruderschnecke 4 rotierend die Kautschukmischung fördert und plastifiziert. Im Inneren des Gehäuses 1 der Zahnradpumpe rotieren zwei Zahnräder 5,6 und fördern das Extrudat vom Eingangskanal 7 in den Austrittskanal 8 und von dort in den Spritzkopf 9, welcher an das Gehäuse 1 angeflanscht ist. In den zu den Stirnseiten der Zahnräder 5,6 parallelen Wandungen des Austrittskanales 8 ist eine Vertiefung 10 eingearbeitet, um zwischen den Zähnen der Zahnräder 5,6 unter hohen Druck gesetztes Fördergut in den Austrittskanal hineinfördern zu können.

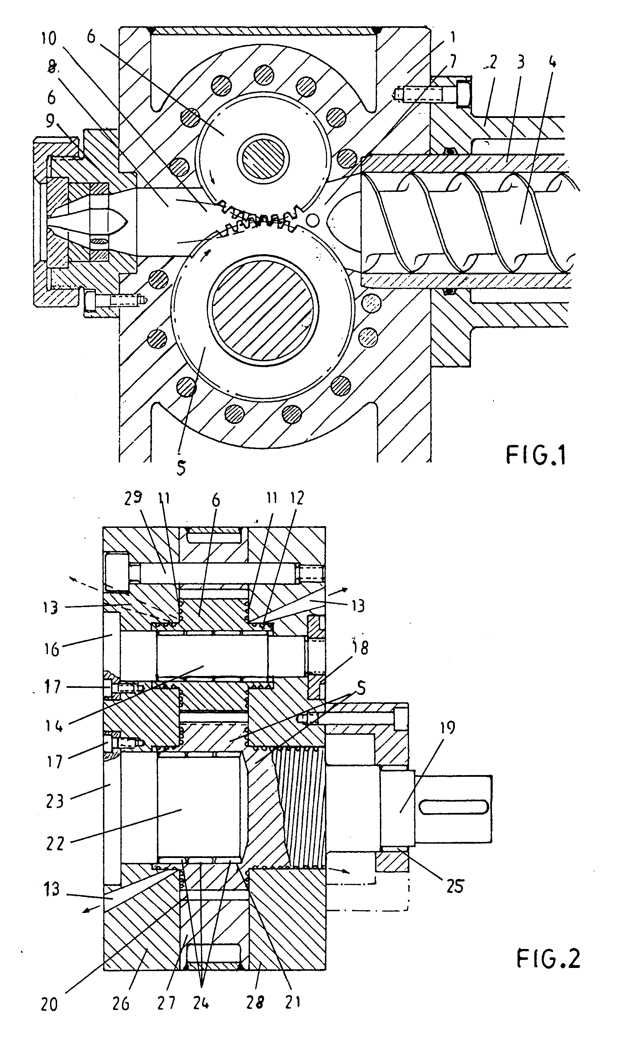

Wie aus Fig. 2 ersichtlich, sind an den Stirnseiten der Zahnräder 5,6 Förderspiralen 11 und an den wellenförmigen bzw. hohlzapfenförmigen Teilen Fördergewinde 12 angeordnet. Diese Förderspiralen 11 und Fördergewinde 12 dienen der Rückförderung, und zwar die Förderspiralen 11 der Rückführung von Leckfördergut und das Fördergewinde 12 für die Rückführung von Schmiermittel. Unter den hohen Drucken, die sowohl im Förderraum auftreten, als auch die das Schmiermittel beaufschlagen, können diese Arbeitsmittel weder das Fördergut noch das Schmiermittel vollständig zurückführen, sie sollen es auch nicht. Sowohl für die Reinhaltung des Schmiermittels als auch für die Reinhaltung des Fördergutes ist es nämlich vorteilhaft, wenn ein Teil der Leckströmung nach außen abgeführt wird. Hierzu dienen Kanäle 13, die zweckmäßigerweise noch mit einer im Gehäuse angeordneten Rille verbunden sein können.

Die Wirkung der Dichtspiralen und Dichtgewinde kann entscheidend durch Einpressen von mischungsverträglichen Bestandteilen, z.B. bestimmter Thermoplaste, vorzugsweise Polyäthylen, z.B. mit einer Dosierpumpe in den Bereich der Dichtspiralen oder -gewinde verbessert werden. In manchen Fällen kann dann auf die Leckauslässe verzichtet werden.

Das kleinere Zahnrad 6 ist auf einem Bolzen 14 gelagert, der mehrere Abschnitte unterschiedlichen Durchmessers aufweist. Zwischen dem mittleren Abschnitt dieses Bolzens 14 und den Innenwandungen des Zahnrades 6 sind Nadeln 15 eines Nadellagers in vier parallelen Reihen angeordnet. Am einen Ende weist dieser Bolzen 14 einen Flansch 16 auf, welcher mittels Schrauben 17 im Gehäuse 1 befestigt ist. An seinem anderen Ende trägt der Bolzen 14 ein Gewinde, auf welches eine Mutter 18 aufgeschraubt ist, welche in eine Ausnehmung des Gehäuses 1 eingreift.

Das Zahnrad 5 größeren Durchmessers ist mit der Antriebswelle 19 verbunden oder es ist einstückig mit dieser Antriebswelle hergestellt. Diese Welle 19 ist im Bereich unterhalb der Zähne 20 mit einem Hohlraum 21 versehen, in welchen ein Lagerzapfen 22 eingreift. Dieser Lagerzapfen 22 ist abgestuft ausgebildet, mit seinem mittleren Teil sitzt er in einem Paßsitz im Gehäuse 1, sein eines Ende ist als Flansch 23 ausgebildet und mittels Schrauben 17 im Gehäuse 1 befestigt. Der in das Innere des Gehäuses 1 hineinragende Endteil dieses Lagerzapfens 22 trägt den oder die Innenringe für Nadellager 24, welche das Zahnrad 5 lagern, welches somit direkt unter den Zähnen gelagert ist und welches somit einerseits durch die Nadellager 24, andererseits durch Nadellager 25 für die Lagerung der Welle 19 gelagert ist.

Das Gehäuse selbst ist aus drei Teilen 26, 27, 28 aufgebaut, welche durch Schrauben 29 zusammengeklammert sind.

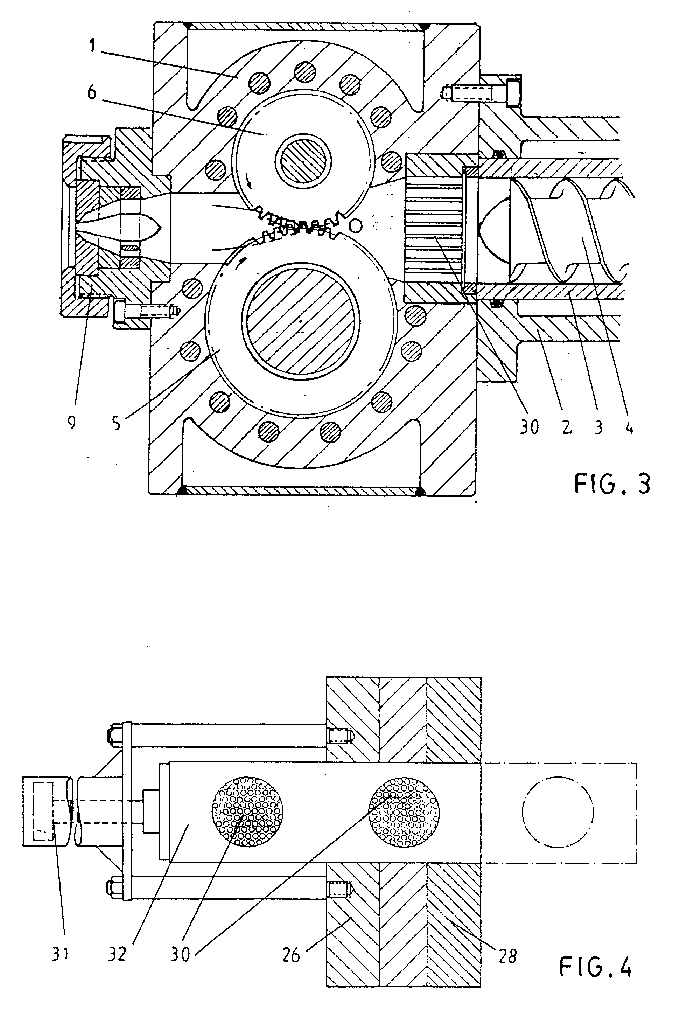

In der Ausführungsform der Fig. 3 ist ein Strainersieb 30 im Eintrittskanal 7 angeordnet, welches dazu dient, Fremdkörper von den Zahnrädern 5, 6 fernzuhalten. Aus Fig. 4 ist ersichtlich, daß hier eine Siebwechselvorrichtung vorgesehen ist, nämlich ein mittels des Servomotors 31 verschiebbarer Schieber 32, welcher zwei Strainersiebe 30 aufnimmt, die wechselseitig in den Extrudatstrom eingeschoben werden können, wobei jeweils ein Sieb außerhalb des Extrudatstromes befindlich ist und hier außerhalb der Vorrichtung gereinigt oder gewechselt werden kann.

### Liste der Bezugszeichen:

- 1: Gehäuse
- 2: Zylinder
- 3: Büchse
- 4: Schnecke
- 5: Zahnrad
- 6: Zahnrad
- 7: Eingangskanal
- 8: Austrittskanal
- 9: Spritzkopf
- 10: Vertiefung
- 11: Förderspirale
- 12: Fördergewinde
- 13: Kanal
- 14: Bolzen
- 15: Nadel
- 16: Flansch
- 17: Schraube
- 18: Mutter
- 19: Antriebswelle
- 20: Zahn
- 21: Hohlraum
- 22: Lagerzapfen
- 23: Flansch
- 24: Nadellager
- 25: Nadellager
- 26: Gehäuseteil
- 27: Gehäuseteil
- 28: Gehäuseteil
- 29: Schraube
- 30: Strainersieb
- 31: Servomotor
- 32: Schieber

## Patentansprüche

1. Zahnradpumpe,
bestehend aus einem mit einem Einlaß- (7) und einem Auslaßkanal (8) versehenen Gehäuse (1) und zwei außenverzahnten Zahnrädern (5,6), deren Lager abgedichtet gegen das Fördergut im Gehäuse (1) gelagert sind, dadurch gekennzeichnet, daß die Abdichtungen (11,12) in Form einer Förder-daß spirale (11) zur Rückförderung von Fördergut an den Stirnseiten der Zahnräder (5,6) zur Trennung von Förderraum (7,8) und Lagerung der Zahnräder angeordnet sind,
daß an den wellenförmigen bzw. hohlzapfenförmigen Teilen der Zahnräder (5,6) Fördergewinde 12 für die Rückführung von Schmiermittel angeordnet sind, daß hohe Drucke das Schmiermittel beaufschlagen, und daß Kanäle 13 am Ort des Zusammentreffens von Fördergewinde (12) und Förderspirale (11) vorgesehen sind, durch die die Leckströmung des Fördergutes und des Schmiermittels nach außen abgeführt wird.

## Claims

1. Gear pump consisting of a housing (1) provided with an inlet passage (7) and an outlet passage (8), and two externally toothed gear wheels (5,6), the bearings of which are sealed against the substance being conveyed in the housing (1), characterised in that the seals (11,12) in the form of a conveying helix (11) for returning substance being conveyed are disposed on the front sides of the gear wheels (5,6) for separation of the conveying chamber (7,8) and mounting of the gear wheels, in that conveying threads (12) for returning lubricant are disposed on the shaft-shaped or hollow journal-shaped parts of the gear wheels (5,6), in that high pressures act on the lubricant, and in that passages (13) are provided at the point of coincidence of conveying thread (12) and conveying helix (11) through which the leaking stream of substance being conveyed and lubricant is carried away to the outside.

## Revendications

1. Pompe à engrenage composée d'un corps (1) muni d'un canal d'arrivée (7) et d'un canal de départ (8), et de deux roues dentées (5, 6) à denture extérieure, dont les paliers sont montés dans le corps de façon à être isolés hermétiquement du produit à transporter, caractérisée en ce que les joints (11, 12) formés d'une spirale transporteuse (11) servant à renvoyer en arrière le produit à transporter sont disposés sur les faces frontales des roues dentées (5, 6) pour séparer la chambre de pompage (7, 8) des paliers des roues dentées,
en ce que, sur les parties des roues dentées (5, 6) qui présentent la forme d'arbres ou de tourillons creux, sont disposés des pas de vis transporteurs (12) servant à renvoyer le lubrifiant en arrière,
en ce que de hautes pressions sollicitent le lubrifiant, et en ce qu'il est prévu, au point de rencontre du pas de vis transporteur (12) et de la spirale transporteuse (11), des canaux (13) par lesquels le courant de fuite du produit à transporter et celui du lubrifiant sont évacués à l'extérieur.
